# FASCICULE DE BREVET EUROPEEN

(11) **EP 3 174 757 B1**
(45) Date de publication et mention de la délivrance du brevet: **10.07.2019**
(21) Numéro de dépôt: 15753969.3
(22) Date de dépôt: 22.07.2015
(51) Int. Cl.: B60P 3/08

(54) **PALETTE PORTEUSE AMOVIBLE, INDIVIDUELLE ET UNIVERSELLE, POUR VÉHICULE PORTE-VOITURES**
INDIVIDUELLE, UNIVERSELLE, ENTFERNBARE, LASTTRAGENDE PALETTE FÜR AUTOTRAGEFAHRZEUG
INDIVIDUAL, UNIVERSAL, REMOVABLE, LOAD-BEARING PALLET FOR CAR-CARRYING VEHICLE

(30) Priorité: 28.07.2014 FR 1457306
(43) Date de publication de la demande: 07.06.2017
(73) Titulaire: Lohr Electromecanique, 67980 Hangenbieten (FR)
(72) Inventeur: SCHEER, Daniel, F-67190 Still (FR)
(74) Mandataire: Merckling, Norbert
(86) Numéro de dépôt international: PCT/FR2015/052014
(87) Numéro de publication internationale: WO 2016/016548

(56) Documents cités:
- EP-A1- 0 381 605
- EP-A1- 1 745 981
- AU-A1- 2008 229 867
- FR-A1- 2 573 014
- US-A- 5 525 026

## Description

La présente invention se rapporte au domaine technique général du transport de fret et plus particulièrement au transport de voitures au moyen de palettes de manutention.

L'invention concerne plus particulièrement une palette porteuse de manutention et de transport, indépendante et amovible, destinée à être chargée sur un véhicule porte-voitures spécifique, routier ou ferroviaire, par exemple un camion, un fourgon, une remorque, une semi-remorque, un convoi articulé ou un wagon, ou bien encore un conteneur de transport, lui-même placé par exemple sur une semi-remorque, un porte-conteneur ou un wagon.

Le document EP 0 381 605 A1 divulgue une palette porteuse selon le préambule de la revendication indépendante 1.

Les véhicules porte-voitures classiques sont généralement équipés d'un ensemble de plateaux, dits individuels, car conçus pour supporter une voiture chacun. Ces plateaux sont mobiles et inclinables dans l'espace de chargement, afin d'optimiser le remplissage du véhicule porte-voitures et ainsi d'augmenter la capacité globale de transport, en utilisant au mieux les formes et dimension des voitures adjacentes.

C'est par exemple le cas de la semi-remorque divulguée dans la demande de brevet AU 2008 229 867 qui comporte classiquement un plateau supérieur mobile et un plateau inférieur. Afin d'optimiser le remplissage, le plateau inférieur comprend une plateforme motorisée, mobile entre une position de chargement/déchargement et une position inclinée de transport.

Cependant, cette plateforme mobile, comme toutes les autres plateformes de la semi-remorque décrite, est indissociable de la semi-remorque et ne peut pas être enlevée de la semi-remorque pour être posée au sol. Le chargement de la semi-remorque se fait donc de manière classique en utilisant les capacités de déplacement propres à chacune des voitures à transporter, qui pénètrent successivement par l'arrière de la semi-remorque et roulent sur des rampes d'accès et des voies de roulage jusqu'à leur emplacement de transport définitif.

Afin de raccourcir et de faciliter le chargement/déchargement des voitures sur les véhicules porte-voitures et d'éviter aux opérateurs d'avoir à monter et à se déplacer dans l'espace de chargement de ces véhicules, il s'est également développé des véhicules différents, dont l'espace de chargement reste entièrement libre et uniquement délimité par deux parois latérales, et qui sont prévus pour transporter des « voitures palettisées ».

Dans ces véhicules, le chargement des voitures se fait au moyen de palettes de manutention et de transport, indépendantes et amovibles, qui sont posées au sol à l'extérieur du véhicule et sur chacune desquelles on place une voiture. Une fois sanglé, l'ensemble palette/voiture est ensuite chargé sur le véhicule porte-voitures par un robot ou un manipulateur motorisé, préférentiellement automatisé. La palette est alors fixée aux parois latérales du véhicule porte-voitures dans la position et l'inclinaison la plus adaptée pour optimiser le remplissage du véhicule porte-voiture. Une fois fixée sur les parois du véhicule porte-voitures, chacune de ces palettes amovibles joue le rôle d'un plateau individuel.

Ces palettes de manutention sont ainsi des structures indépendantes et amovibles, distinctes et séparées du véhicule de transport et de l'appareil de manutention. Elles ne constituent pas un équipement du véhicule, mais sont un accessoire de la charge (la voiture) qu'elles portent.

D'une façon générale, les palettes de manutention sont des moyens destinés à porter une charge. Leur structure est conçue pour permettre la manutention et le transport de la palette avec sa charge, ce qui affranchit l'utilisateur de toute manutention directe de la marchandise.

Elles sont ainsi particulièrement avantageuses pour le transport des voitures, qui sont très délicates à saisir en vue d'une manutention directe. En effet, ce sont des marchandises indivisibles particulièrement fragiles, de valeur marchande élevée et dont l'intégrité et l'esthétique doivent absolument être préservées pendant la manutention et le transport.

Avec un tel système, ce n'est plus la voiture directement, mais l'ensemble constitué par la palette avec sa charge, c'est-à-dire la « voiture-palettisée », qui est manutentionnée, portée et déplacée jusqu'à l'intérieur du véhicule de transport.

L'invention se rapporte aux palettes de manutention, indépendantes et amovibles de ce type.

De telles palettes ont par exemple été divulguées dans le brevet antérieur US 5,525,026.

Les palettes décrites dans ce document comportent classiquement quatre supports de roue, plans et sensiblement rectangulaires, disposés aux quatre coins de la palette. Lorsqu'une voiture est chargée sur cette palette, chacune de ses roues est censée reposer sur l'un de ces supports de roue.

Le problème est que les voitures présentent un gabarit différent selon les modèles. Elles ont ainsi un empattement (distance entre l'essieu avant et l'essieu arrière du véhicule), une voie (distance entre les deux roues d'un même essieu) et un diamètre de roue variables selon les modèles. Les petites voitures ont généralement un empattement et une voie étroite, avec des roues de faible diamètre de l'ordre de 530 mm par exemple, alors que les gros véhicules ont au contraire un empattement et une voie large, avec des roues de diamètre beaucoup plus important pouvant aller par exemple jusqu'à 800 mm pour une limousine ou un 4x4, toutes les configurations intermédiaires pouvant également être rencontrées.

Or, les palettes décrites dans l'art antérieur présentent des structures de réception pour les roues, qui sont fixes et non réglables ou adaptables. Ces palettes ne peuvent donc pas s'adapter automatiquement aux différents gabarits des voitures qu'elles sont censées porter.

Des palettes spécifiques aux dimensions adaptées doivent être utilisées en fonction du type de voitures que l'on souhaite transporter. Différents modèles de palettes doivent donc être prévus selon les besoins, ce qui génère un surcoût important lié à l'achat des différents jeux de palettes, et complique le stockage et la gestion des stocks de palettes.

Le but de l'invention est de fournir une palette amovible, universelle permettant le chargement d'une voiture quel que soit son gabarit, c'est-à-dire son empattement, sa voie et le diamètre de ses roues.

Avec la palette selon l'invention, l'adaptation aux différents types de véhicules à transporter se fait sans aucun réglage, remplacement ou démontage, mais uniquement par la nature et la forme particulièrement avantageuses de ses moyens.

En outre, les palettes divulguées dans le brevet US 5,525,026 contiennent des moyens de commande et d'actionnement du système de fixation leur permettant d'être fixées aux parois latérales du véhicule de transport, qui s'étendent dans la partie centrale de la palette et viennent l'obstruer. Cet espace central ne peut donc pas servir à l'imbrication des voitures pendant leur transport.

Afin d'optimiser le remplissage des véhicules porte-voitures en imbriquant le plus possible les voitures adjacentes sans laisser d'espace perdu, les palettes selon l'invention sont au contraire réalisées sous la forme d'un cadre avec un espace central libre permettant d'optimiser cette imbrication et de deux zones de réception, une à l'avant et l'autre à l'arrière, pour supporter les roues de la voiture à transporter.

Cette imbrication peut encore être améliorée lorsque la palette est prévue inclinable à l'une ou l'autre de ses extrémités ou à ses deux extrémités, selon une variante préférentielle de l'invention, et comporte pour cela des zones support d'extrémité articulées. Lorsqu'une voiture est chargée sur cette palette porteuse, il est ainsi possible d'abaisser l'un de ses trains de roues, ou ses deux trains de roues simultanément, afin d'obtenir la configuration de chargement optimale conduisant à la meilleure imbrication possible de l'ensemble des voitures transportées dans le véhicule ou conteneur porte-voitures.

Enfin, afin de diminuer le poids transporté, de limiter son coût et de ne pas pénaliser les possibilités d'ajourement de la palette, la palette selon l'invention ne renferme aucun moyen moteur, contrairement à celle divulguée dans le brevet US 5,525,026 qui comporte des moyens moteur et des moyens de renvoi dans son épaisseur afin de pouvoir mettre en oeuvre le système décrit.

La palette selon l'invention répond avantageusement à toutes ces exigences et confère de nombreux avantages en exploitation par rapport aux systèmes antérieurs connus.

Pour résoudre ce problème technique, l'invention enseigne une palette porteuse de manutention et de transport, individuelle et amovible, destinée à porter une voiture et à être chargée sur un véhicule ou conteneur porte-voitures.

Cette palette porteuse comprend deux longerons longitudinaux reliés mécaniquement entre eux par des traverses, une première zone support d'extrémité située au niveau de la première extrémité de la palette porteuse qui supporte les roues du premier train de roues de la voiture en position de transport, une deuxième zone support d'extrémité située au niveau de la deuxième extrémité de la palette porteuse qui supporte les roues du deuxième train de roues de la voiture en position de transport, et un espace central situé entre les longerons, la première zone support d'extrémité et la deuxième zone support d'extrémité.

Selon l'invention, la palette porteuse est non-motorisée et son espace central est libre.

En outre, la première zone support d'extrémité comprend :
- un appui-roues, situé au niveau de la première extrémité de la palette porteuse et contre lequel les roues du premier train de roues de la voiture viennent en butée en position de transport,
- un élément transversal, qui relie les deux longerons et comporte deux branches obliques réunies par une partie centrale dirigée vers la première extrémité de la palette porteuse, et
- une niche, définie entre l'appui-roues, l'élément transversal et les longerons, dont la largeur diminue de manière continue et symétrique en allant des longerons vers la partie centrale, et dans laquelle les deux roues du premier train de roues de la voiture s'enfoncent et se retrouvent calées en position de transport, quels que soient l'empattement, la voie et le diamètre des roues de la voiture à transporter.

La deuxième zone support d'extrémité comprend un platelage dont les dimensions sont suffisantes pour supporter les roues du deuxième train de roues de la voiture lorsque les roues du premier train de roue de la voiture sont enfoncées et calées dans la niche en position de transport, quels que soient l'empattement, la voie et le diamètre des roues de la voiture à transporter.

Selon un mode de réalisation de la palette selon l'invention, au moins une des zones support d'extrémité est une partie articulée et peut être placée en position inclinée par rapport à l'axe de la partie centrale des longerons.

Selon un mode de réalisation de l'invention, l'appui-roues, qui est préférentiellement porté par la traverse d'extrémité de la palette porteuse, comprend un plan incliné, montant en direction de la première extrémité de la palette porteuse. L'appui-roues peut être formé de deux éléments d'appui discontinus, servant chacun de moyen d'appui individuel pour l'une des roues du premier train de roues de la voiture.

Selon un mode de réalisation de l'invention, l'élément transversal présente une section tubulaire aplatie, à fond plat et bords inclinés. Sa partie centrale est préférentiellement de forme pointue, arrondie ou plane, conférant à l'élément transversal une forme générale en chevron, en arc, ou partiellement trapézoïdale.

Selon un mode de réalisation de l'invention, le platelage présente un renfoncement dans sa partie centrale. De préférence, il débute et se termine par une portion d'extrémité inclinée qui s'élève progressivement à partir du bord du platelage. Le platelage peut être formé de deux plaques de roulement individuelles destinées à supporter chacune l'une des roues du deuxième train de roues de la voiture.

Selon un mode de réalisation de l'invention, le platelage, l'élément transversal ou l'appui-roues est réalisé en tôle perforée ou en matériau antidérapant.

Selon un mode de réalisation de l'invention, la palette porteuse comprend un système de sanglage intégré, de préférence un système de tendeur à cliquet, permettant d'arrimer les roues de la voiture. Au moins une des traverses peut être tubulaire et partiellement ouverte afin d'y loger ce système de sanglage.

Selon un mode de réalisation préférentiel de l'invention, les longerons de la palette porteuse comportent des ouvertures donnant accès à un logement creux ménagé dans chacun de ces longerons, ce logement creux étant destiné à accueillir des moyens moteur ou d'actionnement d'un préhenseur, engagés à travers les ouvertures et servant à déplacer ou à orienter la palette porteuse non-motorisée et/ou à actionner des moyens de verrouillage de la palette dans sa position de transport.

D'autres caractéristiques et avantages de l'invention apparaîtront à la lecture de la description détaillée non limitative qui va suivre, description faite en référence aux dessins annexés, dans lesquels :
- la figure 1 est une vue générale en perspective d'un camion porte-voitures équipé de palettes porteuses individuelles solidarisées au camion porte-voitures, selon un premier exemple d'application de l'invention ;
- la figure 2 est une vue générale en perspective d'un véhicule porte-voitures de type semi-remorque équipé d'un robot manipulateur chargeant des palettes amovibles, selon un deuxième exemple d'application de l'invention ;
- les figures 3 et 4 sont des vues, respectivement en perspective et de dessus, d'un exemple de palette porteuse universelle selon l'invention ;
- les figures 5 et 6 sont des vues, respectivement de dessus et en coupe longitudinale, de la palette porteuse universelle de la figure 3, sur laquelle on a représenté les roues d'une voiture de petite taille ;
- les figures 7 et 8 sont des vues, respectivement de dessus et en coupe longitudinale, de la palette porteuse universelle de la figure 3, sur laquelle on a représenté les roues d'une voiture de grande taille ; et
- les figures 9a, 9b ; 9c, 9d sont des vues de profil de configurations possibles par réglage d'un exemple de réalisation d'une palette porteuse conforme à l'invention.

La palette porteuse universelle selon la présente invention va maintenant être décrite de façon détaillée en référence aux figures. Les éléments équivalents représentés sur les différentes figures porteront les mêmes références numériques ou alphanumériques.

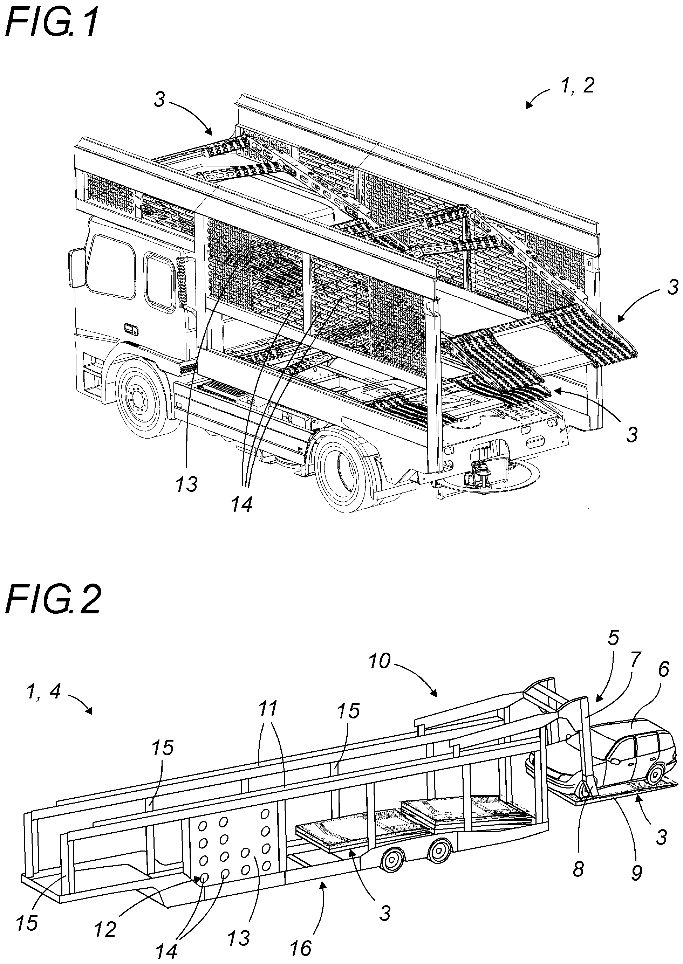

La figure 1 illustre un premier exemple d'utilisation des palettes universelles selon l'invention.

Il s'agit d'un véhicule porte-voitures 1 de type camion 2 qui comporte un ensemble de palettes porteuses 3, conçues pour supporter une voiture chacune, qui ont préalablement été montées sur le véhicule porte-voitures et solidarisées à la structure latérale de celui-ci.

Comme il sera décrit plus en détails ci-après, ces palettes porteuses 3 présentent selon l'invention des moyens leur permettant de s'adapter sans réglage à tous les gabarits standards de voiture à transporter.

La figure 2 représente un deuxième exemple d'utilisation des palettes porteuses 3 universelles selon l'invention.

Il s'agit cette fois d'un véhicule porte-voitures 1 de type semi-remorque 4 équipé pour recevoir des palettes porteuses 3 amovibles qui sont chargées au moyen d'un manipulateur 5 motorisé et préférentiellement automatisé.

La figure 2 illustre une phase de chargement au cours de laquelle on charge sur la semi-remorque 4 une palette porteuse 3 selon l'invention, qui supporte une voiture 6.

La palette porteuse 3 est déplacée par l'intermédiaire du manipulateur 5 motorisé lequel saisit la palette porteuse 3 par l'intermédiaire de deux bras latéraux 7 se terminant chacun par un préhenseur 8. La palette porteuse 3 est par conséquent saisie ou accrochée via le préhenseur 8 sur chacun de ses côtés latéraux et plus précisément sur chacun de ses longerons 9 longitudinaux.

La palette porteuse 3 comporte préférentiellement dans ses longerons 9 des ouvertures 41 dans lesquelles les préhenseurs 8 du manipulateur 5 peuvent s'engager afin de saisir la palette porteuse 3.

Avantageusement, ces ouvertures 41 peuvent donner accès à un logement creux 42 ménagé dans le longeron 9 correspondant de la palette porteuse 3. Ce logement 42 peut ainsi accueillir des moyens moteurs d'activation ou d'actionnement appartenant au préhenseur 8 et servant à déplacer et/ou à orienter la palette porteuse 3 non-motorisée, et/ou à actionner un ensemble de verrouillage 12 de la palette porteuse 3 en position de transport sur le véhicule 1.

Ces ouvertures 41 et ces logements 42 constituent ainsi des moyens d'accueil destinés à coopérer avec les préhenseurs 8.

Un charriot 10 portant le manipulateur 5 se déplace sur des rails de guidage 11 s'étendant le long et de part et d'autre de l'espace de chargement dans la semi-remorque 4. Le charriot 10 permet ainsi de déplacer le manipulateur 5 et par conséquent la palette porteuse 3 dans l'espace de chargement.

Les bras latéraux 7 sont avantageusement télescopiques et articulés sur le charriot 10 et les préhenseurs 8 sont quant à eux articulés sur les extrémités inférieures desdits bras latéraux 7.

Le manipulateur 5 permet ainsi d'une part de déplacer la palette porteuse 3 dans une direction verticale et dans une direction horizontale et d'autre part de modifier via les préhenseurs 8, l'orientation de la palette porteuse 3.

Une fois la palette porteuse 3 placée au bon endroit et dans une position optimale pour le transport, elle est fixée au véhicule 1, par exemple le camion 2 ou la semi-remorque 4, à l'aide d'un ensemble de verrouillage 12 dont une partie des moyens est portée par la palette porteuse 3 et l'autre partie par le véhicule 1.

Pour cela, le véhicule 1 peut présenter sur ses côtés latéraux, des parois latérales constituant une structure support 13, laquelle est pourvue de logements 14 qui font partie de cet ensemble de verrouillage 12. Bien que partiellement représentée sur la figure 2 pour des raisons de simplification, la structure support 13 s'étend avantageusement entre tous les montants 15 reliant la base 16 de la semi-remorque 2 aux rails longitudinaux 11.

La palette porteuse 3 comporte également des moyens complémentaires appartenant à cet ensemble de verrouillage 12 permettant d'immobiliser la palette porteuse 3 sur la structure support 13.

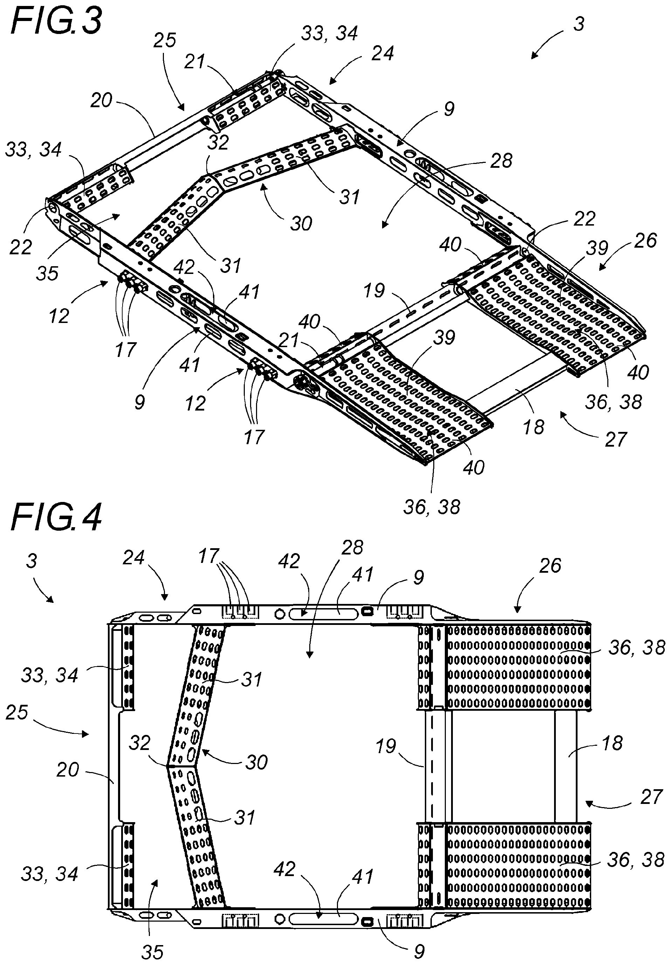

La palette porteuse 3 représentée sur la figure 3 comporte ainsi par exemple des plots 17 escamotables qui coopèrent avec les logements 14 du véhicule ou conteneur porte-voitures afin de réaliser le verrouillage de la palette amovible sur le véhicule ou conteneur porte-voitures.

Les plots 17 sont montés coulissants dans les longerons 9 de la palette porteuse 3 et sont aptes à s'engager dans les logements 14 ménagés dans la structure support 13. Ces plots 17 sont par exemple disposés en deux groupes de trois plots 17 dans chaque longeron 9, de manière à constituer quatre éléments de verrouillage de la palette. Avantageusement, ces plots 17 sont prévus pour être déplacés entre une position escamotée dans le longeron 9 (représentée sur la figure 4) correspondant au déverrouillage de la palette porteuse 3 et une position en saillie latérale par rapport aux longerons 9 (représentée sur la figure 3) correspondant au verrouillage de ladite palette porteuse 3.

Chaque longeron 9 peut comporter en outre des organes d'entrainement (non représenté) permettant de déplacer les plots 17 d'une position à l'autre.

Une fois la palette porteuse 3 immobilisée sur la structure support 13 au moyen de l'ensemble de verrouillage 12, elle est libérée par les préhenseurs 8 et décrochée du manipulateur 5. Le chariot 10 peut alors se déplacer jusqu'au stock de palettes porteuses 3 posées à l'arrière de la semi-remorque 4. Le manipulateur 5 saisit la palette porteuse 3 suivante, la pose à terre en dehors du véhicule afin qu'il soit possible d'y faire monter et d'y arrimer une nouvelle voiture 6, puis la soulève une fois chargée.

Les opérations précédentes sont alors répétées jusqu'à ce que la totalité du chargement à transporter soit chargé et fixé dans la semi-remorque 4 en position de transport.

Sur les figures 3 à 8, on a représenté de manière isolée un exemple de réalisation de palette porteuse 3 conforme à l'invention.

La palette porteuse 3 représentée comprend une structure générale en cadre comportant deux longerons 9 longitudinaux reliés mécaniquement entre eux par des traverses 18, 19, 20 préférentiellement tubulaires pour plus de rigidité et à section par exemple ronde ou rectangulaire.

Selon une variante préférentielle de l'invention, certaines de ces traverses, 19 et 20 sur l'exemple représenté, peuvent être partiellement ouvertes par exemple sur le dessus, afin d'y loger un système de sanglage 21 nécessaire à l'arrimage des voitures sur la palette porteuse 3. Un certain nombre d'ouvertures 22 sont également prévues dans les longerons 9 pour le passage du système de sanglage.

Avantageusement, le système de sanglage 21 peut être déjà intégré dans la palette porteuse 3 pour un plus grand confort de l'opérateur. Il s'agit par exemple comme représenté d'un système de tendeur à cliquet permettant d'attacher les roues 23 de la voiture 6 de manière sécurisée et conforme aux normes en vigueur.

La palette porteuse 3 comporte également une première zone support d'extrémité 24, située au niveau de la première extrémité 25 de la palette porteuse 3, et une deuxième zone support d'extrémité 26, située au niveau de la deuxième extrémité 27 de la palette porteuse 3. Ces zones support d'extrémité 24, 26 s'étendent transversalement aux longerons 9 et sont fixées aux traverses 18, 19, 20.

Entre les deux longerons 9 et ces deux zones support d'extrémité 24, 26 est défini un espace central 28 qui reste libre et traversant pour faciliter l'imbrication des voitures portées par les différentes palettes 3 afin d'en transporter le maximum. Cet espace central 28 libre permet ainsi le passage d'une partie saillante d'une voiture voisine : par exemple son toit, l'extrémité de son coffre ou de son capot.

La première zone support d'extrémité 24 est destinée à recevoir le premier train de roues 29, indifféremment avant ou arrière, de la voiture 6 en position de transport.

Cette première zone support d'extrémité 24 comprend un élément transversal 30 qui relie les deux longerons 9 de la palette porteuse 3. Cet élément transversal 30 comporte deux branches obliques 31, réunies par une partie centrale 32 dirigée vers la première extrémité 25 de la palette porteuse 3 et préférentiellement de forme pointue, arrondie ou plane, conférant à l'ensemble une forme générale en chevron, en arc, ou partiellement trapézoïdale.

Cet élément transversal 30 est préférentiellement réalisé en tôle perforée ou en un autre matériau antidérapant.

Il présente de préférence une section tubulaire aplatie, préférentiellement à fond plat et bords inclinés, par exemple en demi-ellipse. La forme tubulaire de sa section lui donne ainsi la rigidité suffisante pour réaliser la liaison avec les longerons 9 et supporter le poids de la voiture 6 sans qu'il soit nécessaire de le renforcer mécaniquement par l'ajout d'une traverse supplémentaire à ce niveau. Bien entendu, l'ajout d'une traverse supplémentaire à ce niveau pourra être envisagé sans sortir du cadre de l'invention.

En outre, en raison de ses bords inclinés, l'élément transversal 30 forme avantageusement deux rampes progressives, successivement ascendante et descendante, qui permettent un franchissement aisé de cet élément transversal 30 par les roues 23 d'une voiture 6.

Cette première zone support d'extrémité 24 comprend également un appui-roues 33, de préférence porté par la traverse 20 d'extrémité de la palette porteuse 3, qui est un moyen d'appui pour l'extrémité des roues 23 du premier train de roues 29 de la voiture 6. Cet appui-roues 33 peut être continu sur sensiblement toute la longueur de la traverse 20 ou, comme sur l'exemple préférentiel représenté, formé de deux éléments d'appui discontinus 34 servant chacun de moyen d'appui individuel pour l'une des roues 23 du premier train de roues 29 de la voiture 6 par exemple localisés au niveau des deux extrémités de la traverse 20.

Cet appui-roues 33 peut être directement conformé dans la traverse d'extrémité 20 ou préférentiellement réalisé sous la forme d'une extension de celle-ci comme représenté, ou encore d'un moyen indépendant solidarisé à celle-ci.

Cet appui-roues 33, contre lequel viennent en butée les roues 23, avant ou arrière, de la voiture 6, se présente de préférence sous la forme d'un plan incliné, montant en direction de l'extrémité de la palette porteuse 3, et préférentiellement réalisé en tôle perforée ou en un autre matériau antidérapant.

Entre l'élément transversal 30 et le moyen d'appui 33 est délimitée une niche 35, de préférence à fond ouvert, bordée latéralement par les longerons 9 et dont la largeur varie en raison de la forme de l'élément transversal 30.

En position de transport de la voiture 6, cette niche 35 reçoit les deux roues 23 du premier train de roues 29 qui s'y enfoncent et s'y trouvent calées d'une manière satisfaisante, sans réglage et quel que soit leur diamètre, en raison de la largeur variable de cette niche 35.

La deuxième zone support d'extrémité 26 comporte un platelage 36 destiné à supporter le deuxième train de roues 37, indifféremment avant ou arrière, de la voiture 6 en position de transport.

Ce platelage 36 est préférentiellement formé de deux plaques de roulement individuelles 38, destinées à supporter chacune l'une des roues 23 du deuxième train de roues 37 de la voiture 6, et par exemple réalisées en tôle perforée ou en matériau antidérapant
Ces plaques de roulement individuelles 38 présentent une longueur suffisante pour pouvoir supporter les roues 23 de la voiture quels que soient son modèle et son gabarit et pour pouvoir s'adapter aux différences d'empattement comme il sera expliqué par la suite.

De même la largeur de ces plaques de roulement individuelles 38 est suffisante pour pouvoir s'adapter à toutes les largeurs de roues 23 susceptibles d'être rencontrées ainsi qu'aux différences de voies existant d'un modèle de voiture à l'autre.

Comme on peut le voir sur la figure 3, les plaques de roulement individuelles 38 ne sont préférentiellement pas plates, mais présente avantageusement un renfoncement 39 dans leur partie centrale. Ce renfoncement 39 est destiné à recevoir les roues 23 de la voiture 6 transportée, ce qui permet avantageusement d'abaisser la hauteur globale du chargement et ainsi d'améliorer l'imbrication de l'ensemble des voitures transportées pour en optimiser le chargement.

Les plaques de roulement individuelles 38 débutent et se terminent préférentiellement par une portion d'extrémité inclinée 40 qui s'élève progressivement à partir du bord de la plaque 38. Cette portion inclinée 40 sert avantageusement de rampe progressive pour les roues 23 de la voiture 6 qui doit monter et rouler sur la palette porteuse 3 posée au sol pour atteindre sa position de chargement.

Selon un autre mode de réalisation non représenté, la deuxième zone support d'extrémité 26 peut également être réalisée sous la forme d'un unique platelage 36 transversal continu, même si cette solution est moins avantageuse car elle nécessite plus de matière.

Avantageusement, la palette porteuse 3 selon l'invention permet le chargement de la voiture 6 quel que soit son gabarit, c'est-à-dire quels que soient son empattement, sa voie et le diamètre de ses roues. Cette adaptation aux différents gabarits des véhicules susceptibles d'être transportés se fait automatiquement, sans aucun réglage, ni changement, montage ou déplacement de pièces.

Bien entendu, cette adaptation est possible avec des véhicules de gabarit standard, c'est-à-dire ceux dont l'empattement et la voie sont égales ou comprises entre les valeurs minimales et maximales d'empattement et de voie rencontrées avec les différents modèles de véhicules fabriqués par les constructeurs automobiles.

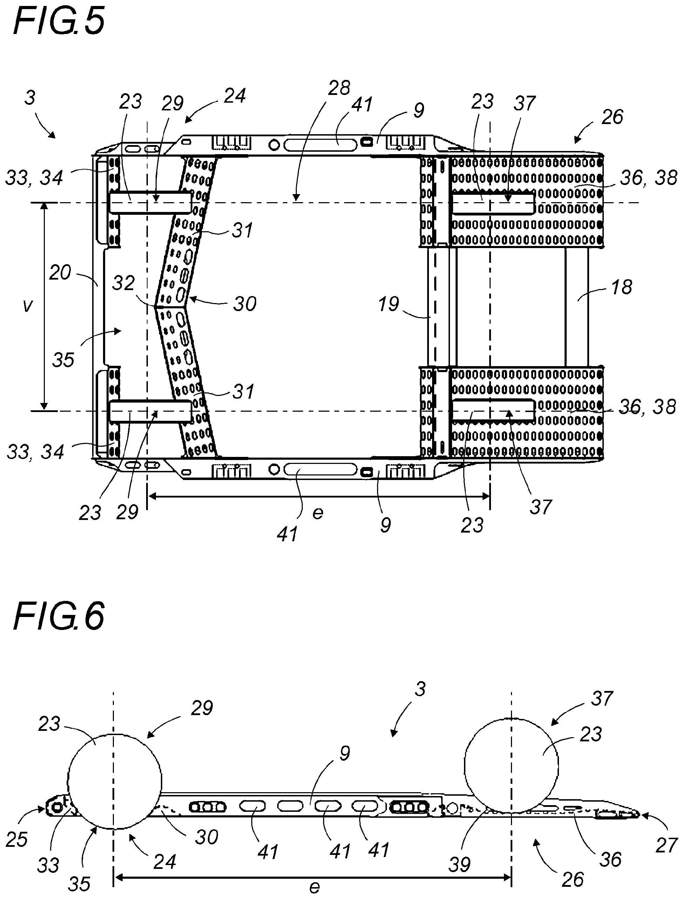

Cet effet découle de manière évidente des moyens décrits précédemment, mais sera mieux compris à l'aide des figures 5 à 8.

Les figures 5 et 6 concernent le cas d'une petite voiture dont les roues 23, de petit diamètre, ont été représentées sur la palette 4. Cette petite voiture présente classiquement un empattement faible (symbolisé sur les figures par la lettre e) et une voie faible (symbolisée sur les figures par la lettre v).

Comme sa voie est faible, cette voiture peut être chargée dans la partie centrale de la palette porteuse 3. Dans cette zone, la niche 35 présente une largeur réduite, car on se rapproche de la partie centrale 32 de l'élément transversal 30. Malgré leur petit diamètre, chacune des roues 23 du premier train de roues 29 de la petite voiture est parfaitement calée dans cette niche 35, d'un côté par l'élément d'appui 34 et de l'autre par la branche oblique 31 de l'élément transversal 30.

Cet effet est préférentiellement encore renforcé par le caractère incliné en direction l'une de l'autre des parois en regard de l'élément d'appui 34 et de la branche oblique 31, qui permet une adaptation parfaite au diamètre de la roue et un enfoncement approprié de celle-ci.

Les deux autres roues 23 de la petite voiture reposent sur la partie avant des plaques de roulement 38.

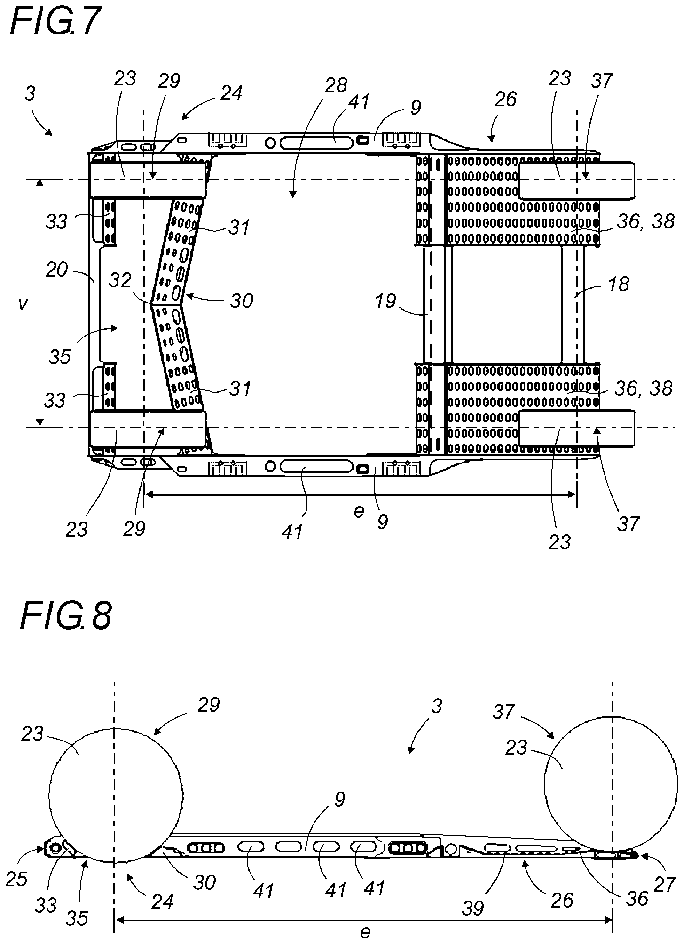

Lorsqu'au contraire, on souhaite charger une grande voiture sur la palette porteuse 3, on se trouve dans la situation représentée sur les figures 7 et 8.

Les grandes voitures, dont les roues 23 sont de grand diamètre, présentent toujours un empattement important (symbolisé sur les figures par la lettre e) accompagné d'une voie importante (symbolisée sur les figures par la lettre v).

Dans ce cas, comme la voie est importante, la voiture se retrouve chargée dans la zone latérale de la palette porteuse 3, près des longerons 9. Dans cette zone, la niche 35 présente une largeur beaucoup plus importante, car on se trouve à proximité de l'extrémité des branches obliques 31 de l'élément transversal 30.

Malgré leur diamètre important, les roues 23 de la grande voiture peuvent correctement s'enfoncer dans la niche 35 et y être calée et maintenue d'une façon satisfaisante. Là encore, le caractère incliné des parois en regard de l'élément d'appui 34 et de la branche oblique 31 permet de s'adapter parfaitement au diamètre des roues afin de garantir un enfoncement et un calage appropriés de celles-ci.

Les deux autres roues 23 de la grande voiture reposent cette fois sur la partie arrière des plaques de roulement 38 qui sont prévues de longueur suffisante.

Tous les autres cas de gabarits intermédiaires sont envisageables de la même façon. En effet, la largeur de la niche 35 varie de manière continue entre ces deux extrémités.

Selon une variante préférentielle de l'invention, la palette porteuse 3 peut être articulée au voisinage de l'une de ses extrémités 25 ou 27, ou aux deux extrémités 25 et 27 portant les zones support d'extrémité respectivement 24 et 26.

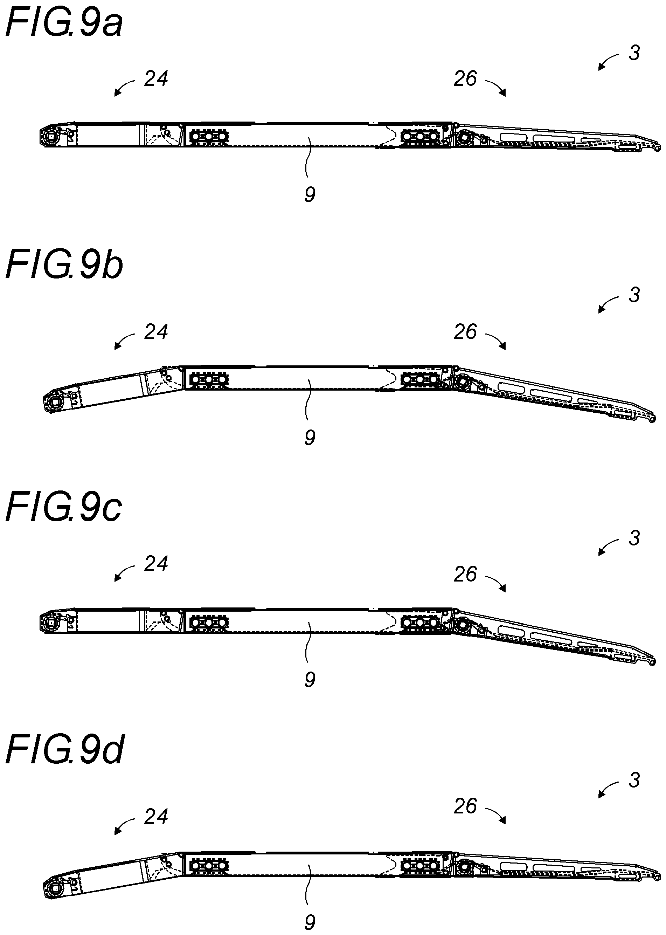

Pour cela, elle présente par exemple des articulations au niveau de ses longerons 9 qui permettent d'incliner la ou les zone(s) support d'extrémité 24, 26 par rapport à la partie centrale des longerons 9. La première zone support d'extrémité 24 située au niveau de la première extrémité 25 de la palette porteuse 3 et/ou la deuxième zone support d'extrémité 26 située au niveau de la deuxième extrémité 27 de la palette porteuse 3 peut(vent) ainsi être placée(s) en position inclinée vers le bas, par rapport à l'axe de la partie centrale des longerons 9. Des exemples de configurations possibles de la palette porteuse 3 sont illustrés par les figures 9a, 9b, 9c et 9d. L'inclinaison souhaitée aux extrémités 25, 27 de la palette porteuse 3 est avantageusement obtenue par un réglage manuel.

Les articulations permettent avantageusement de conserver la rigidité de l'ensemble de la palette porteuse 3 après le réglage de l'inclinaison souhaitée de la zone support d'extrémité 24 ou 26.

Lorsqu'une voiture 6 est chargée sur cette palette porteuse 3, il est ainsi possible d'abaisser l'un de ses trains de roues 29 ou 37, ou ses deux trains de roues 29 et 37 simultanément, afin d'obtenir la configuration de chargement optimale conduisant à la meilleure imbrication possible de l'ensemble des voitures 6 transportées dans le véhicule 1 ou conteneur porte-voitures.

Bien entendu, au sein d'un chargement, toutes les palettes porteuses 3 ne sont pas forcément articulées. Ainsi, selon le nombre et la nature des voitures à transporter, certaines palettes 3 localisées à des endroits spécifiques de l'espace de chargement peuvent être articulées, alors que les autres ne le sont pas.

## Revendications

1. Palette porteuse (3) de manutention et de transport, individuelle et amovible, destinée à supporter une voiture (6) et à être chargée sur un véhicule (1) ou conteneur porte-voitures, palette porteuse (3) comprenant deux longerons (9) longitudinaux reliés mécaniquement entre eux par des traverses (18, 19, 20), une première zone support d'extrémité (24) située au niveau d'une première extrémité (25) de la palette porteuse (3), une deuxième zone support d'extrémité (26) située au niveau d'une deuxième extrémité (27) de la palette porteuse (3) et un espace central (28) situé entre les longerons (9), la première zone support d'extrémité (24) et la deuxième zone support d'extrémité (26), la palette porteuse (3) étant non-motorisée et son espace central (28) étant libre et étant **caractérisée en ce que**
- la première zone support d'extrémité (24) comprend :
• un appui-roues (33), situé au niveau de la première extrémité (25) de la palette porteuse (3) et contre lequel des roues (23) d'un premier train de roues (29) de la voiture (6) viennent en butée en position de transport,
• un élément transversal (30), qui relie les deux longerons (9) et comporte deux branches obliques (31) réunies par une partie centrale (32) dirigée vers la première extrémité (25) de la palette porteuse (3), et
• une niche (35), définie entre l'appui-roues (33), l'élément transversal (30) et les longerons (9), dont la largeur diminue de manière continue et symétrique en allant des longerons (9) vers la partie centrale (32), et dans laquelle les roues (23) s'enfoncent et se retrouvent calées en position de transport, quels que soient l'empattement, la voie et le diamètre des roues (23) de la voiture (6) à transporter ;
- la deuxième zone support d'extrémité (26) comprend un platelage (36) dont les dimensions sont suffisantes pour supporter les roues (23) d'un deuxième train de roues (37) de la voiture (6) lorsque les roues (23) du premier train de roue (29) sont enfoncées et calées dans la niche (35), quels que soient l'empattement, la voie et le diamètre des roues (23) de la voiture (6) à transporter.

2. Palette porteuse (3) selon la revendication 1 **caractérisée en ce qu'**au moins une des zones support d'extrémité (24, 26) est une partie articulée et peut être placée en position inclinée par rapport à l'axe de la partie centrale des longerons (9).

3. Palette porteuse (3) selon l'une quelconque des revendications précédentes **caractérisée en ce que** l'appui-roues (33) est formé de deux éléments d'appui discontinus (34) servant chacun de moyen d'appui individuel pour l'une des roues (23) du premier train de roues (29) de la voiture (6).

4. Palette porteuse (3) selon l'une quelconque des revendications précédentes **caractérisée en ce que** l'appui-roues (33) est porté par la traverse (20) d'extrémité de la palette porteuse (3).

5. Palette porteuse (3) selon l'une quelconque des revendications précédentes **caractérisée en ce que** l'appui-roues (33) comprend un plan incliné, montant en direction de la première extrémité (25) de la palette porteuse (3).

6. Palette porteuse (3) selon l'une quelconque des revendications précédentes **caractérisée en ce que** la partie centrale (32) de l'élément transversal (30) est de forme pointue, arrondie ou plane, conférant à l'élément transversal (30) une forme générale en chevron, en arc, ou partiellement trapézoïdale.

7. Palette porteuse (3) selon l'une quelconque des revendications précédentes **caractérisée en ce que** l'élément transversal (30) présente une section tubulaire aplatie, à fond plat et bords inclinés.

8. Palette porteuse (3) selon l'une quelconque des revendications précédentes **caractérisée en ce que** le platelage (36) est formé de deux plaques de roulement (38) individuelles destinées à supporter chacune l'une des roues (23) du deuxième train de roues (37) de la voiture (6).

9. Palette porteuse (3) selon l'une quelconque des revendications précédentes **caractérisée en ce que** le platelage (36) présente un renfoncement (39) dans sa partie centrale.

10. Palette porteuse (3) selon l'une quelconque des revendications précédentes **caractérisée en ce que** le platelage (36) débute et se termine par une portion d'extrémité inclinée (40) qui s'élève progressivement à partir du bord du platelage (36).

11. Palette porteuse (3) selon l'une quelconque des revendications précédentes **caractérisée en ce que** le platelage (36), l'élément transversal (30) ou l'appui-roues (33) est réalisé en tôle perforée ou en matériau antidérapant.

12. Palette porteuse (3) selon l'une quelconque des revendications précédentes **caractérisée en ce qu'**elle comprend un système de sanglage (21) intégré, permettant d'arrimer les roues (23) de la voiture (6).

13. Palette porteuse (3) selon la revendication 12 **caractérisée en ce qu'**au moins une (19, 20) des traverses (18, 19, 20) est tubulaire et partiellement ouverte afin d'y loger le système de sanglage (21) nécessaire à l'arrimage des roues (23) de la voiture (6).

14. Palette porteuse (3) selon l'une quelconque des revendications précédentes **caractérisée en ce que** les longerons (9) comportent des ouvertures (41) donnant accès à un logement creux (42) ménagé dans chacun des longerons (9), ce logement creux (42) étant destiné à accueillir des moyens moteur ou d'actionnement d'un préhenseur (8), engagés à travers les ouvertures (41) et servant à déplacer ou à orienter la palette porteuse (3) non-motorisée ou à actionner des moyens de verrouillage de la palette dans sa position de transport.

## Patentansprüche

1. Individuelle und abnehmbare Trägerpalette (3) zur Handhabung und zum Transport, die dazu bestimmt ist, ein Auto (6) aufzunehmen, und auf ein Fahrzeug (1) oder einen Pkw-Transporter aufgeladen zu werden, wobei die Trägerpalette (3) zwei Längsträger (9), die durch Querträger (18, 19, 20) mechanisch miteinander verbunden sind, sowie einen ersten Auflagebereich (24), der an einem ersten Ende (25) der Trägerpalette (3) angeordnet ist, einen zweiten Auflagebereich (26), der an einem zweiten Ende (27) der Trägerpalette (3) und einen zentralen Raum (28) umfasst, der sich zwischen den Längsträgern (9), dem ersten Auflagebereich (24) und dem zweiten Auflagebereich (26) angeordnet ist, wobei die Trägerpalette (3) nicht motorisiert ist und ihr zentraler Raum (28) frei ist, **dadurch gekennzeichnet, dass** :
- der erste Auflagebereich (24) folgendes umfasst:
- einen Radträger (33), der am ersten Ende (25) der Trägerpalette (3) angeordnet ist, und gegen den die Räder (23) eines ersten Radsatzes (29) des Fahrzeugs (6) in der Transportstellung anschlagen,
- ein sich in Querrichtung erstreckendes Element (30), das die beiden Längsträger (9) verbindet und zwei durch einen zentralen Teil (32) verbundene schräge Arme (31) umfasst, die sich zum ersten Ende (25) der Trägerpalette (3) hin erstreckt und
- eine Nische (35), die zwischen dem Radträger (33), dem Querelement (30) und den Längsträgern (9) definiert ist, deren Breite von den Längsträgern (9) zum Mittelteil (32) kontinuierlich und symmetrisch abnimmt und in die die Räder (23) eintauchen und in der Transportstellung arretiert sind, unabhängig von Radstand, Spur und Durchmesser der Räder (23) des zu transportierenden Fahrzeugs (6);
- der zweite Endstützbereich (26) ein Deck (36) von ausreichender Größe umfasst, um die Räder (23) eines zweiten Radsatzes (37) des Fahrzeugs (6) aufzunehmen, wenn die Räder (23) des ersten Radsatzes (29) in die Aussparung (35) eingetrieben und blockiert sind, unabhängig von Radstand, Spur und Durchmesser der Räder (23) des zu transportierenden Fahrzeugs (6).

2. Trägerpalette (3) nach Anspruch 1, **dadurch gekennzeichnet, dass** mindestens eine der Endauflagebereiche (24, 26) artikuliert ist und in Bezug auf die Achse des Mittelteils der Längsträger (9) in eine geneigte Position gebracht werden kann.

3. Trägerpalette (3) nach einem der vorstehenden Ansprüche, **dadurch gekennzeichnet, dass** der Radträger (33) aus zwei diskontinuierlichen Auflageelementen (34) gebildet ist, die jeweils als individuelle Stützmittel für eines der Räder (23) des ersten Radsatzes (29) des Wagens (6) dienen.

4. Trägerpalette (3) nach einem der vorstehenden Ansprüche, **dadurch gekennzeichnet, dass** die Radträger (33) vom Endquerträger (20) der Trägerpalette (3) getragen wird.

5. Trägerpalette (3) nach einem der vorstehenden Ansprüche, **dadurch gekennzeichnet, dass** der Radträger (33) eine geneigte Ebene umfasst, die zum ersten Ende (25) der Trägerpalette (3) hin ansteigt.

6. Trägerpalette (3) nach einem der vorstehenden Ansprüche, **dadurch gekennzeichnet, dass** der Mittelteil (32) des Querelements (30) spitz, abgerundet oder flach ist, wodurch das Querelement (30) eine allgemeine Winkel-, Bogen- oder teilweise trapezförmige Form erhält.

7. Trägerpalette (3) nach einem der vorstehenden Ansprüche, **dadurch gekennzeichnet, dass** das Querelement (30) einen abgeflachten Rohrabschnitt mit flachem Boden und geneigten Kanten aufweist.

8. Trägerpalette (3) nach einem der vorstehenden Ansprüche, **dadurch gekennzeichnet, dass** das Deck (36) aus zwei einzelnen Laufplatten (38) gebildet ist, die jeweils dazu bestimmt sind, eines der Räder (23) des zweiten Radsatzes (37) des Fahrzeugs (6) zu tragen.

9. Trägerpalette (3) nach einem der vorstehenden Ansprüche, **dadurch gekennzeichnet, dass** das Deck (36) in seinem zentralen Teil eine Aussparung (39) aufweist.

10. Trägerpalette (3) nach einem der vorstehenden Ansprüche, **dadurch gekennzeichnet, dass** das Deck (36) mit einem geneigten Endabschnitt (40) beginnt und endet, der allmählich vom Rand des Decks (36) abhebt.

11. Trägerpalette (3) nach einem der vorstehenden Ansprüche, **dadurch gekennzeichnet, dass** das Deck (36), das Querelement (30) oder der Radträger (33) aus Lochblech oder einem rutschfesten Material besteht.

12. Trägerpalette (3) nach einem der vorstehenden Ansprüche, **dadurch gekennzeichnet, dass** sie ein integriertes Gurtsystem (21) beinhaltet, mit dem die Räder (23) des Fahrzeugs (6) festgezurrt werden können.

13. Trägerpalette (3) nach Anspruch 12, **dadurch gekennzeichnet, dass** mindestens einer (19, 20) der Querträger (18, 19, 20) rohrförmig und teilweise offen ist, um das zur Sicherung der Räder (23) des Wagens (6) erforderliche Gurtsystem (21) aufzunehmen.

14. Trägerpalette (3) nach einem der vorstehenden Ansprüche, **dadurch gekennzeichnet, dass** die Längsträger (9) Öffnungen (41) aufweisen, die den Zugang zu einem in jedem der Längsträger (9) vorgesehenen Hohlraum (42) ermöglichen, wobei dieser Hohlraum (42) dazu bestimmt ist, Antriebsmittel oder Mittel zur Betätigung eines Greifers (8) aufzunehmen, der durch die Öffnungen (41) eingreift und dazu dient, die nichtmotorisierte Trägerpalette (3) zu bewegen oder zu orientieren oder Mittel zur Verriegelung der Palette in ihrer Transportstellung zu aktivieren.

## Claims

1. An individual, removable, handling and transportation, load-bearing pallet (3) destined to support a car (6) and to be loaded onto a car-carrying vehicle (1) or container, said load-bearing pallet (3) comprising two longitudinal beams (9) mechanically interconnected by crosspieces (18, 19, 20), a first end support area (24) located at the first end (25) of the load-bearing pallet (3), a second end support area (26) located at the second end (27) of the load-bearing pallet (3) and a central space (28) located between the longitudinal beams (9), the first end support area (24) and the second end support area (26), said load-bearing pallet (3) being unmotorized and the central space (28) thereof being free; and said load-bearing pallet being **characterized in that**:
- the first end support area (24) comprises:
• a wheel rest (33), located at the first end (25) of the load-bearing pallet (3) and against which the wheels (23) of a first set of wheels (29) of the car (6) abut in the transportation position,
• a transverse element (30), which connects both longitudinal beams (9) and includes two oblique arms (31) joined by a central portion (32) directed toward the first end (25) of the load-bearing pallet (3), and
• a recess (35) defined between the wheel rest (33), the transverse element (30) and the longitudinal beams (9), which has a width continuously and symmetrically decreasing from the longitudinal beams (9) to the central portion (32), and wherein the wheels (23) sink down and are wedged in the transportation position, regardless of the wheelbase, the track and the diameter of the wheels (23) of the car (6) to be transported;
- the second end support area (26) comprises a decking (36) the dimensions of which are sufficient to support the wheels (23) of a second set of wheels (37) of the car (6) when the wheels (23) of the first set of wheels (29) are sunk down and wedged into the recess (35), regardless of the wheelbase, the track and the diameter of the wheels (23) of the car (6) to be transported.

2. The load-bearing pallet (3) according to claim 1, **characterized in that** at least one of the end support areas (24, 26) is an articulated portion and may be placed in a tilted position relative to the axis of the central portion of the longitudinal beams (9).

3. The load-bearing pallet (3) according to any one of the preceding claims, **characterized in that** the wheel rest (33) is formed of two discrete support elements (34), each serving as an individual bearing means for one of the wheels (23) of the first set of wheels (29) of the car (6).

4. The load-bearing pallet (3) according to any one of the preceding claims, **characterized in that** the wheel rest (33) is carried by the end crosspiece (20) of the load-bearing pallet (3).

5. The load-bearing pallet (3) according to any one of the preceding claims, **characterized in that** the wheel rest (33) comprises a tilted plane, rising in the direction of the first end (25) of the load-bearing palette (3).

6. The load-bearing pallet (3) according to any one of the preceding claims, **characterized in that** the central portion (32) of the transverse element (30) is pointed, rounded or flat, conferring to the transverse element (30) a general chevron, arc, or partially trapezoidal shape.

7. The load-bearing pallet (3) according to any one of the preceding claims, **characterized in that** the transverse element (30) has a flattened tubular section with a flat bottom and tilted edges.

8. The load-bearing pallet (3) according to any one of the preceding claims, **characterized in that** the decking (36) is formed of two individual support plates (38), each destined to support one of the wheels (23) of the second set of wheels (37) of the car (6).

9. The load-bearing pallet (3) according to any one of the preceding claims, **characterized in that** the decking (36) has a recess (39) in the central portion thereof.

10. The load-bearing pallet (3) according to any one of the preceding claims, **characterized in that** the decking (36) begins and ends with a tilted end portion (40) which gradually rises from the edge of the decking (36).

11. The load-bearing pallet (3) according to any one of the preceding claims, **characterized in that** the decking (36), the transverse element (30) or the wheel rest (33) is made of perforated sheet metal or non-slip material.

12. The load-bearing pallet (3) according to any one of the preceding claims, **characterized in that** it comprises an integrated strapping system (21), allowing the wheels (23) of the car (6) to be secured.

13. The load-bearing pallet (3) according to claim 12, **characterized in that** at least one (19, 20) of the crosspieces (18, 19, 20) is tubular and partially open in order to house the strapping system (21) necessary to secure the wheels (23) of the car (6).

14. The load-bearing pallet (3) according to any one of the preceding claims, **characterized in that** the longitudinal beams (9) include openings (41) giving access to a hollow housing (42) formed in each of the longitudinal beams (9), this hollow housing (42) being intended to receive driving or actuating means of a gripper (8), which are engaged through the openings (41) and are used to move or orient the unmotorized load-bearing pallet (3) or to actuate means to lock the pallet in the transportation position thereof.
